# EUROPÄISCHE PATENTSCHRIFT

(11) **EP 1 486 312 B1**
(45) Veröffentlichungstag und Bekanntmachung des Hinweises auf die Patenterteilung: **24.08.2005**
(21) Anmeldenummer: 04012961.1
(22) Anmeldetag: 02.06.2004
(51) Int. Cl.: B29C 45/17, B29C 45/76

(54) **Spritzgiessform mit einem ein Zählwerk aufweisenden elektronischen Datenspeicher**
Injection mould with a data storage including a counter
Moule à injecter avec un stockage de données comprennant un compteur

(30) Priorität: 05.06.2003 DE 20308880 U
(43) Veröffentlichungstag der Anmeldung: 15.12.2004
(73) Patentinhaber: Otto Männer Heisskanalsysteme GmbH & Co. KG, 79353 Bahlingen (DE)
(72) Erfinder: Männer, Hans Peter, 79353 Bahlingen (DE)
(74) Vertreter: Dimmerling, Heinz

(56) Entgegenhaltungen:
- EP-A- 0 726 129
- WO-A-02/40247
- US-A1- 2003 072 831

## Beschreibung

Die Erfindung betrifft eine Spritzgießform mit wenigstens zwei Formhälften, von denen wenigstens eine relativ zu der anderen zum Öffnen und Schließen der Spritzgießform bewegbar ist, mit einem ein Zählwerk aufweisenden elektronischen Datenspeicher, dessen Zählwerk die Zahl der Spritzgießvorgänge oder die Zahl der Schließbewegungen der Formhälften erfaßt und abrufbar in dem Datenspeicher ablegt. Eine Spritzgießform nach dem Oberbegriff von Anspruch 1 ist in der US-A- 2003/072831 offenbart.

Eine solche Spritzgießform ermöglicht es dem Benutzer und auch dem Formenbauer, die Belastung der Spritzgießform hinsichtlich der durchgeführten Spritzgießvorgänge zu überwachen beziehungsweise zu überprüfen. Dabei besteht jedoch das Problem, daß der Datenspeicher mit der Spritzgießform fest verbunden ist und bei der etwa zweimal in einem Jahr anfallenden Reinigung dieser Spritzgießform zerstört wird und also ersetzt werden muß. Dabei hat jedoch vor allem der Benutzer der Spritzgießform kein großes Interesse daran, den Datenspeicher zu ersetzen, so daß dessen Ersatz trotz der Zerstörung häufig unterbleibt und dann eine Überwachung oder Prüfung der durchgeführten Spritzgießvorgänge nicht mehr möglich ist.

Es besteht deshalb die Aufgabe, eine Spritzgießform mit Datenspeicher der eingangs genannten Art zu schaffen, dessen Beschädigung oder Zerstörung bei der Reinigung der Form vermieden werden kann, so daß er nach einem solchen Reinigungsvorgang seine Aufgabe weiter erfüllen kann.

Zur Lösung dieser Aufgabe ist die eingangs definierte Spritzgießform dadurch gekennzeichnet, daß der Datenspeicher demontierbar an der Spritzgießform vorgesehen ist und einen Sensor zum Erfassen seines demontierten Zustandes sowie ein Zeiterfassungselement zur Bestimmung der Dauer des demontierten Zustands aufweist. Somit kann für den Reinigungsvorgang der Spritzgießform der Datenspeicher demontiert werden, jedoch wird Manipulationen durch den Benutzer, die ebenfalls in einer Demontage dieses Speichers bestehen könnten, dadurch vorgebeugt, daß die Demontage und die Zeitdauer der Demontage von dem Datenspeicher selbst erfaßt werden. Der Lieferant der Spritzgießform kann also jederzeit überprüfen, ob dieser Datenspeicher länger und/oder öfter als für übliche Reinigungsvorgänge demontiert wurde, um beispielsweise die wahre Anzahl von Spritzgießvorgängen zu verschleiem.

Zweckmäßig ist es dabei, wenn der Datenspeicher an der unbeweglichen Formhälfte demontierbar befestigt ist. Somit braucht er die Öffnungs- und Schließbewegungen der Spritzgießform nicht mitzumachen.

Eine besonders einfache und zweckmäßige Ausführungsform der Erfindung kann vorsehen, daß innerhalb eines Gehäuses oder an einem Halter des Datenspeichers ein Reedkontakt und an der den Datenspeicher aufweisenden Formhälfte benachbart zu der Stelle, an der dieser Reedkontakt angeordnet ist, ein Magnet vorgesehen ist, der den Reedkontakt in Montagestellung des Gehäuses schließt, wobei der Reedkontakt durch eine räumliche Entfernung des Datenspeichers von dem Magneten selbsttätig offenbar ist. Dies stellt eine sehr einfache und zweckmäßige Anordnung dar, um das Demontieren des Datenspeichers zusammen mit seinem Gehäuse festzustellen und über das schon erwähnte Zeiterfassungselement auch die Dauer dieses demontierten Zustands zu erkennen. Obwohl der Datenspeicher in einem möglichst geschlossenen Gehäuse angeordnet ist, läßt sich über einen solchen im Inneren des Gehäuses befindlichen Reedkontakt mit einem von außen wirksamen Magneten der montierte beziehungsweise demontierte Zustand des Datenspeichers sehr einfach feststellen.

Eine weitere Ausgestaltung der Erfindung von ganz erheblicher vorteilhafter Bedeutung kann darin bestehen, daß wenigstens ein mit dem Datenspeicher verbundener Sensor zum Erfassen und Speichern wenigstens einer während des Spritzgießprozesses auftretenden Meßgröße hinsichtlich ihres Wertes und/oder ihrer Dauer vorgesehen ist. Dadurch kann der Datenspeicher für zusätzliche oder weitergehende Kontrollen und Überwachungsfunktionen benutzt werden und somit dem Benutzer oder auch dem Lieferanten der Spritzgießform die Möglichkeit geben, nachträglich zu kontrollieren, in welcher Weise die Spritzgießform benutzt wurde und ob dabei eventuell Grenzbelastungen überschritten wurden.

Bevorzugt kann der wenigstens eine Sensor für eine während des Spritzgießprozesses auftretenden Meßgröße ein Temperatursensor sein. Es können also die in der Form auftretenden Temperaturen erfaßt und dem Speicher zugeführt werden. Gleichzeitig kann das Zeiterfassungselement die Dauer und eventuell von einem bestimmten Höchstwert übersteigende Temperaturen erfassen und speichern. Dadurch wird vor allem der Lieferant der Spritzgießform in die Lage versetzt, nachträglich festzustellen und zu kontrollieren, ob der Benutzer der Spritzgießform die höchstzulässigen Temperaturen eingehalten oder eventuell während des Betriebes oder sogar bei Stillstandszeiten überschritten hat.

Der Temperatursensor kann ein Thermoelement sein, welches im Inneren der Spritzgießform angeordnet und über eine Leitung mit dem Datenspeicher verbunden ist, welcher insbesondere ein Mikrocontroller oder ein Mikroprozessor ist, der die von dem Temperatursensor gelieferten Spannungswerte in Temperaturwerte umrechnet. Ein derartig gestalteter Temperatursensor kann große Temperaturschwankungen mit hoher Genauigkeit erfassen und dem Datenspeicher übermitteln.

Dabei kann das in dem Datenspeicher, insbesondere in dem Mikrocontroller, vorgesehene Zeiterfassungselement zum Erfassen und Speichern der Dauer von einen bestimmten Höchstwert übersteigenden Meßgrößen des Spritzgießprozesses, beispielsweise der Temperaturen, dienen. Somit erhält der Mikrocontroller beziehungsweise das Zeiterfassungselement eine weitere Funktion.

Eine weitere Ausgestaltung der Erfindung kann vorsehen, daß wenigstens ein Drucksensor im Inneren der Spritzgießform vorgesehen ist, der mit dem Datenspeicher verbunden ist und insbesondere den Druckverlauf während der einzelnen Spritzgießvorgänge erfaßt und abrufbar speichert. Durch eine solche Druckerfassung kann der Druckverlauf während der einzelnen Spritzgießvorgänge erfaßt und später überprüft oder nachvollzogen werden, was vor allem für den Benutzer der Spritzgießform wichtig sein kann, wenn die gespritzten Teile beanstandet werden sollten. Außerdem können dadurch wiederum Überlastungen der Spritzgießformen nachträglich erkannt werden.

Der Sensor zum Zählen und Erfassen der Dauer der Öffnungs- und Schließzeiten kann an dem Gehäuse oder Halter des Datenspeichers angeordnet und insbesondere als Piezoelement ausgebildet sein und es kann ein Stößel vorgesehen sein, der relativ zu diesem Sensor durch das Öffnen und Schließen der Spritzgießform verstellbar ist und an dem Sensor beim Schließen anschlägt, so daß die Anzahl der Öffnungs- und Schließvorgänge mechanisch und die Dauer der Öffnungs- und Schließzeiten durch die Abstände der einzelnen Anschläge ermittelbar sind. Mit Hilfe eines als Piezoelement ausgebildeten Anschlagsensors kann also sehr einfach die Relativbewegung der Formhälften beim Öffnen und insbesondere beim Schließen der Spritzgießform zum Zählen dieser Vorgänge ausgenutzt werden.

Dabei kann der Mikrocontroller des Datenspeichers die Zählimpulse erfassen und die Zwischenzeiten zwischen einzelnen Anschlägen des Stößels an dem Piezoelement berechnen und speichern. Somit erhält der Mikrocontroller eine zusätzliche Funktion und ein mechanisches Zählwerk mit entsprechendem Platzbedarf kann vermieden werden.

Die gespeicherten Werte und Daten können an dem Datenspeicher unmittelbar und/oder über eine Leitung oder drahtlos zu einem Bediengerät Übertragbar und' dort ablesbar sein. Dabei ist es günstig, wenn der Datenspeicher eine Infrarotschnittstelle, Blue Tooth, wireless Lan oder dergleichen zum drahtlosen Verbinden mit dem Bediengerät aufweist. Vor allem bei unzugänglicher Anordnung des Datenspeichers an einer Spritzgießform ist eine solche Übertragung der Daten auf ein Bediengerät für den Benutzer vorteilhaft.

An oder in dem Gehäuse oder Halter der Datenspeichers kann für die Stromversorgung eine Batterie oder gegebenenfalls ein wiederaufladbarer Akkumulator vorgesehen sein. Dadurch ist der Datenspeicher vom Stromnetz und dessen eventuellen Schwankungen oder gar Ausfällen unabhängig.

Die Lebensdauer der Batterie kann etwa der Lebensdauer der Form entsprechen, so daß der Datenspeicher zusammen mit seiner Stromversorgung immer der selben Spritzgießform zugeordnet bleiben kann.

Es sei noch erwähnt, daß zum Ablesen der Meßwerte oder Daten an dem Datenspeicher und/oder dem Bediengerät eine Displayanzeige vorgesehen sein kann. Diese ermöglicht ein bequemes Ablesen der jeweils abrufbaren gespeicherten Werte.

Vor allem bei Kombination einzelner oder mehrerer der vorbeschriebenen Merkmale und Maßnahmen können Ereignisse und Zeiten aus einem Spritzgießprozeß erfaßt werden, um Informationen über die Vergangenheit und den Zustand der Spritzgießform seit ihrer Auslieferung zu erhalten. Damit läßt sich eine Prozeßanalyse optimieren und der Lieferant der Spritzgießformen kann eventuell Gewährleistungsansprüche besser überprüfen beziehungsweise bei Feststellung unsachgemäßer Benutzung der Spritzgießform ablehnen. Vor allem können die Schußzahlen, Temperaturen und/oder die jeweiligen Druckverläufe erfaßt und für eine nachträgliche Kontrolle gespeichert und abgerufen werden. Die Vorrichtung ist dabei mit der Form fest verbunden, um ihre Aufgabe gut erfüllen zu können, kann aber für die Reinigung der Form entfernt werden. Damit dadurch keine Manipulationsmöglichkeiten eröffnet werden, wird das Entfernen der Vorrichtung beziehungsweise des Datenspeichers von der Spritzgießform registriert und auch die Dauer ermittelt und gespeichert, während welcher der Datenspeicher nicht mit der Form verbunden war. Vor allem kann nachträglich festgestellt werden, ob zu kurze und somit schädliche Öffnungs- und Schließzeiten angefallen sind und ob eventuell länger dauernde Übertemperaturen aufgetreten sind. Dabei ist eine Temperaturerfassung und -Aufzeichnung vor allem an kritischen Meßpunkten im Heißkanal der Spritzgießform auch zur Prozeßanalyse hilfreich.

Nachstehend ist ein Ausführungsbeispiel der Erfindung anhand der Zeichnung näher beschrieben. Es zeigt in zum Teil schematisierter Darstellung:
- Fig. 1: eine Spritzgießform mit zwei Formhälfte im geöffnetem Zustand ohne die eigentlichen, die negativen Formen oder Formnester enthaltenden Formplatten, wobei an der unbeweglichen Formhälfte der erfindungsgemäß vorgesehene Datenspeicher demontierbar angeordnet ist, sowie
- Fig. 2: ein Blockschaltbild des Datenspeichers und mit ihm verbundener Sensoren.

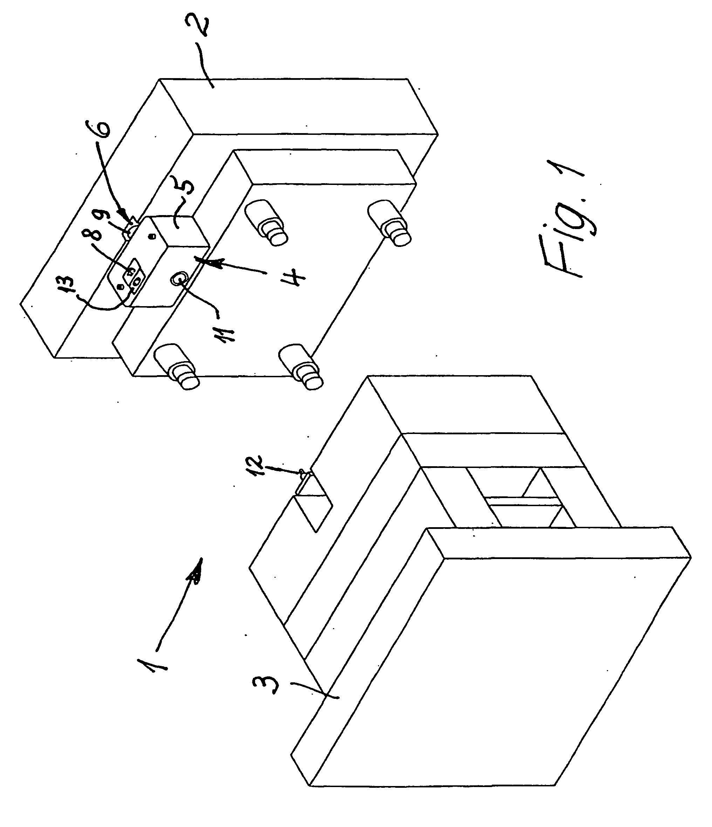

Eine im Ganzen mit 1 bezeichnete Spritzgießform zum Herstellen von gespritzten Teilen aus Kunststoff besteht im wesentlichen aus zwei Formhälften, nämlich einer unbeweglichen Formhälfte 2 und einer relativ dazu bewegbaren Formhälfte 3, die in Fig. 1 in von der Formhälfte 2 wegbewegter Lage dargestellt und zum Schließen der Form 1 gegen die Formhälfte 2 in bekannter Weise bewegbar ist. Die eigentlichen Formplatten mit den Formnestem beziehungsweise der Formhöhlung sind dabei in Fig. 1 der besseren Übersicht wegen nicht dargestellt.

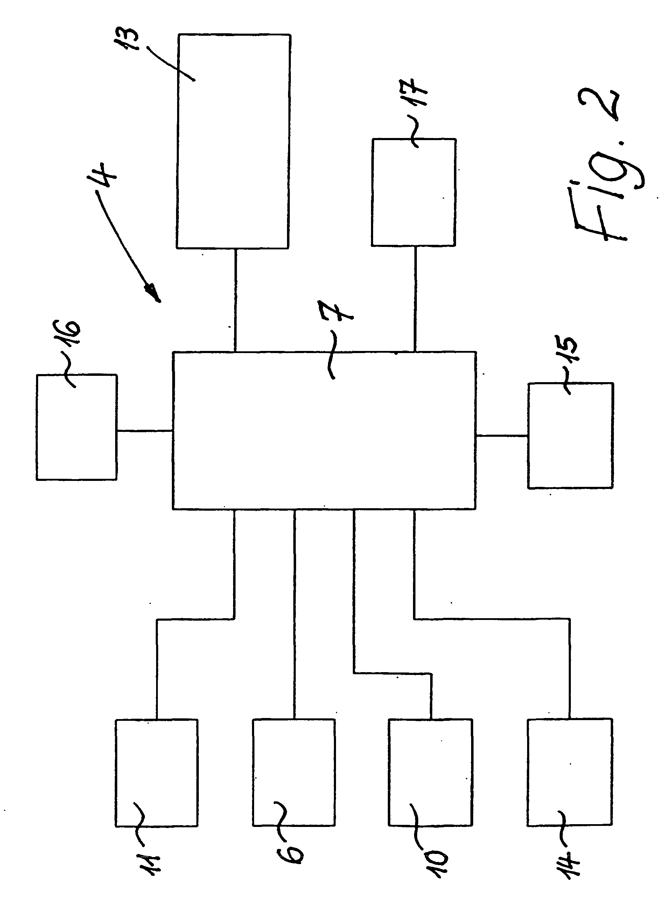

An der festen oder unbeweglichen Formhälfte 2 ist ein im Ganzen mit 4 bezeichneter elektronischer Datenspeicher mit einem elektronischen Zählwerk demontierbar vorgesehen, das heißt das den Datenspeicher 4 enthaltende Gehäuse 5 kann zusammen mit diesem Datenspeicher 4, dessen wesentliche Teile in Fig. 2 als Blockschaltbild dargestellt sind, von der Formhälfte 2 entfernt werden, was vor allem dann notwendig ist, wenn die Spritzgießform 1 und ihre Formhälften 2 und 3 gereinigt werden müssen.

Dabei weist der Datenspeicher 4 beziehungsweise sein Gehäuse 5 einen Demontagesensor 6 zum Erfassen des dementierten Zustandes und außerdem einen Mikrocontroller 7 mit Zeiterfassungselement zur Bestimmung der Dauer des demontierten Zustands auf. Somit kann an dem Datenspeicher 4 nachträglich festgestellt werden, ob er für eine längere Zeit oder öfter, als für Reinigungsvorgänge der Spritzgießform 1 notwendig, demontiert war und die Spritzgießform 1 also unter Umgehung des Zählwerks 8 benutzt worden sein kann.

Der Demontagesensors 6 kann beispielsweise als in dem Gehäuse 5 des Datenspeichers 4 angeordneter Reedkontakt ausgebildet sein, der mit dem Mikrocontroller 7 gemäß Fig. 2 verbunden ist und mit einem Magneten 9 an der Formhälfte 2 außerhalb des Gehäuses 5 derart zusammenwirkt, daß der Reedkontakt in Montagestellung des Gehäuses 5, also in der in Fig. 1 dargestellten Gebrauchsstellung, geschlossen ist und durch eine räumliche Entfernung des Datenspeichers 4 von dem an der Formhälfte 2 befestigten Magneten 9 selbsttätig geöffnet wird, was der Mikrocontroller 7 registriert und auch zeitlich erfassen kann.

In Fig. 2 ist schematisiert dargestellt, daß außerdem wenigstens ein mit dem Datenspeicher beziehungsweise dem Mikrocontroller verbundener Sensor 10 zum Erfassen und Speichern wenigstens einer während des Spritzgießprozesses auftretenden Meßgröße hinsichtlich ihres Wertes und/oder ihrer Dauer vorgesehen ist. Dieser Sensor 10 kann beispielsweise ein Temperatursensor sein, der als Thermoelement ausgebildet und im Inneren der Spritzgießform 1 angeordnet und über eine Leitung mit dem Mikrocontroller 7 verbunden sein kann, welcher von dem Temperatursensor 10 gelieferte Spannungswerte in Temperaturwerte umrechnet.

Dabei kann das in dem Datenspeicher 4 und insbesondere in dem Mikrocontroller 7 vorgesehene oder integrierte Zeiterfassungselement zum Erfassen und Speichern der Dauer solcher Meßgrößen und insbesondere von solchen Meßgrößen dienen, die bestimmte Höchstwerte übersteigen. Dies ermöglicht dem Benutzer und vor allem auch dem Lieferanten der Spritzgießform 1 eine nachträgliche Überprüfung, ob die Spritzgießform 1 in einer für eventuelle Gewährleistungsansprüche richtigen Weise benutzt wurde.

Zusätzlich oder anstelle des Temperatursensors 10 könnte auch ein Drucksensor in gleicher Weise im Inneren der Spritzgießform 1 vorgesehen sein, der mit dem Datenspeicher beziehungsweise Mikrocontroller verbunden ist und den Druckverlauf während der einzelnen Spritzgießvorgänge erfaßt und abrufbar speichert.

Der Mikrocontroller 7 beziehungsweise das darin angeordnete Zeiterfassungselement ist ferner mit einem Sensor 11 verbunden, der die Dauer der Öffnungs-' und Schließzeiten der Spritzgießform 1 erfaßt und abrufbar speichert. Mit einem solchen Schußsensor 11 kann also der' Benutzer und vor allem der Lieferant der Spritzgießform 1 die sachgemäße Benutzung und die Zahl der durchgeführten Schüsse überprüfen.

Dabei ist vor allem auch in Fig. 1 angedeutet, daß dieser Schußsensor 11 zum Zählen und Erfassen der Dauer der Öffnungs- und Schließzeiten an dem Gehäuse 5 des Datenspeichers 4 angeordnet und im Ausführungsbeispiel als Piezoelement ausgebildet ist und daß ferner an der bewegbaren Formhälfte 3 ein Stößel 12 vorgesehen ist, der relativ zu diesem Sensor 11 durch das Öffnen und Schließen der Spritzgießform 1 verstellbar ist und beim Schließen an dem Sensor 11 anschlägt. Somit kann die Anzahl der Öffnungs- und Schließvorgänge mechanisch und die Dauer der Öffnungs- und Schließzeiten durch die Abstände der einzelnen Anschläge ermittelt werden. Dabei kann der Mikrocontroller 7 des Datenspeichers 4 die Zählimpulse erfassen und die Zwischenzeiten zwischen einzelnen Anschlägen des Stößels 12 an dem als Sensor 11 dienenden Piezoelement berechnen und speichern.

Die gespeicherten Werte und Daten können an dem Datenspeicher 4 unmittelbar mit Hilfe einer Displayanzeige 13 ablesbar und/oder drahtlos zu einem nicht näher dargestellten Bediengerät übertragbar und dort ablesbar sein. In Fig. 2 ist zu diesem Zweck eine Infrarotschnittstelle 14 angedeutet, über die eine drahtlose Verbindung zu einem Bedienelement möglich ist.

In Fig. 2 erkennt man deutlich ein mit dem Mikrocontroller 7, der auch als Zeiterfassungselement dient, verbundenes Speicherelement 17 des in dem Gehäuse 5 insgesamt angeordneten Datenspeichers 4. Ferner erkennt man einen mit dem Mikrocontroller 7 verbundenen Taktgeber 15 für die Zeiterfassung und schließlich eine für die Stromversorgung dienende Batterie 16, die ebenfalls in dem Gehäuse 5 angeordnet ist. Somit ist der Datenspeicher 4 von einem Stromnetz und entsprechenden Stromzufuhrleitungen unabhängig.

Die Sensoren 10 und 11 können natürlich nicht wirken, wenn der Speicher 4 beziehungsweise sein Gehäuse 5 nicht in der Form 1 an der Formhälfte 2 in Gebrauchsstellung angeordnet, sondern demontiert ist. Damit dadurch keine Manipulationsmöglichkeiten entstehen, wird jedoch dieser demontierte Zustand von dem vorstehend beschriebenen Demontagesensor 6 erfaßt, auch hinsichtlich der Zeitdauer, so daß ein Lieferant einer solchen Spritzgießform 1 Gewährleistungsansprüche ablehnen kann, wenn zu häufige und/oder zu lange Demontagezeiten gespeichert werden.

## Patentansprüche

1. Spritzgießform (1) mit wenigstens zwei Formhälften (2,3), von denen wenigstens eine relativ zu der anderen zum Öffnen und Schließen der Spritzgießform (1) bewegbar ist, mit einem ein Zählwerk aufweisenden elektronischen Datenspeicher (4), dessen Zählwerk (8) die Zahl der Spritzgießvorgänge oder die Zahl der Schließbewegungen der Formhälften erfaßt und abrufbar in dem Datenspeicher (4) ablegt,
**dadurch gekennzeichnet,**
**daß** der Datenspeicher (4) demontierbar an der Spritzgießform vorgesehen ist und einen Sensor (6) zum Erfassen seines demontierten Zustandes sowie ein Zeiterfassungselement zur Bestimmung der Dauer des demontierten Zustands aufweist.

2. Spritzgießform nach Anspruch 1,
**dadurch gekennzeichnet,**
**daß** der Datenspeicher an der unbeweglichen Formhälfte (2) demontierbar befestigt ist.

3. Spritzgießform nach Anspruch 1 oder 2,
**dadurch gekennzeichnet,**
**daß** innerhalb eines Gehäuses (5) oder an einem Halter des Datenspeichers (4) ein Reedkontakt und an der Datenspeicher (4) aufweisenden Formhälfte (2) benachbart zu der Stelle, an der dieser Reedkontakt vorgesehen ist, ein Magnet (9) vorgesehen ist, der den Reedkontakt in Montagestellung des Gehäuses (5) schließt, wobei der Reedkontakt durch eine räumliche Entfernung des Datenspeichers (4) von dem Magneten (9) selbsttätig offenbar ist.

4. Spritzgießform nach einem der Ansprüche 1 bis 3,
**dadurch gekennzeichnet,**
**daß** wenigstens ein mit dem Datenspeicher (4) verbundener Sensor (10) zum Erfassen und Speichern wenigstens einer während des Spritzgießprozesses auftretenden Meßgröße hinsichtlich ihres Wertes und/oder ihrer Dauer vorgesehen ist.

5. Spritzgießform nach einem der Ansprüche 1 bis 4,
**dadurch gekennzeichnet,**
**daß** der wenigstens eine Sensor (10) für eine während des Spritzgießprozesses auftretenden Meßgröße ein Temperatursensor ist.

6. Spritzgießform nach einem der Ansprüche 1 bis 5,
**dadurch gekennzeichnet,**
**daß** der Temperatursensor (10) ein Thermoelement ist, welches im Inneren der Spritzgießform (1) angeordnet und über eine Leitung mit dem Datenspeicher verbunden ist, welcher insbesondere ein Mikrocontroller (7) oder als Mikroprozessor ist, der die von dem Temperatursensor (10) gelieferten Spannungswerte in Temperaturwerte umrechnet.

7. Spritzgießform nach einem der Ansprüche 1 bis 6,
**dadurch gekennzeichnet,**
**daß** das in dem Datenspeicher (4), insbesondere in dem Mikrocontroller (7) vorgesehene Zeiterfassungselement zum Erfassen und Speichern der Dauer von einen bestimmten Höchstwert übersteigenden Meßgrößen des Spritzgießprozesses, beispielsweise der Temperaturen, dient.

8. Spritzgießform nach einem der Ansprüche 1 bis 7,
**dadurch gekennzeichnet,**
**daß** wenigstens ein Drucksensor im Inneren der Spritzgießform (1) vorgesehen ist, der mit dem Datenspeicher verbunden ist und insbesondere den Druckver lauf während der einzelnen Spritzgießvorgänge erfaßt und abrufbar speichert.

9. Spritzgießform nach einem der Ansprüche 1 bis 8,
**dadurch gekennzeichnet,**
**daß** das Zeiterfassungselement mit einem Sensor (11) verbunden ist, der die Dauer der Öffnungs- und Schließzeiten der Spritzgießform (1) erfaßt und abrufbar speichert.

10. Spritzgießform nach einem der Ansprüche 1 bis 9,
**dadurch gekennzeichnet,**
**daß** der Sensor (11) zum Zählen und Erfassen der Dauer der Öffnungs- und Schließzeiten an dem Gehäuse (5) oder Halter des Datenspeichers (4) angeordnet und insbesondere als Piezoelement ausgebildet ist und daß ein Stößel (12) vorgesehen ist, der relativ zu diesem Sensor (11) durch das Öffnen und Schließen der Spritzgießform (1) verstellbar ist und an dem Sensor (11) beim Schließen anschlägt, so daß die Anzahl der Öffnungs- und Schließvorgänge mechanisch und die Dauer der Öffnungs- und Schließzeiten durch die Abstände der einzelnen Anschläge ermittelbar sind.

11. Spritzgießform nach einem der Ansprüche 1 bis 10,
**dadurch gekennzeichnet,**
**daß** der Mikrocontroller (7) des Datenspeichers (4) die Zählimpulse erfaßt und die Zwischenzeiten zwischen einzelnen Anschlägen des Stößels (12) an dem Piezoelement berechnet und speichert.

12. Spritzgießform nach einem der Ansprüche 1 bis 11,
**dadurch gekennzeichnet,**
**daß** die gespeicherten Werte und Daten an dem Datenspeicher (4) unmittelbar ablesbar sind und/oder über eine Leitung oder drahtlos zu einem Bediengerät Übertragbar und dort ablesbar sind.

13. Spritzgießform nach einem der Ansprüche 1 bis 12,
**dadurch gekennzeichnet,**
**daß** der Datenspeicher eine Infrarotschnittstelle (14), Blue Tooth, wireless Lan oder dergleichen zum drahtlosen Verbinden mit dem Bediengerät aufweist.

14. Spritzgießform nach einem der Ansprüche 1 bis 13,
**dadurch gekennzeichnet,**
**daß** an oder in dem Gehäuse (5) oder Halter des Datenspeichers (4) für die Stromversorgung eine Batterie (16) oder gegebenenfalls ein wiederaufladbarer Akkumulator vorgesehen ist.

15. Spritzgießform nach einem der Ansprüche 1 bis 14,
**dadurch gekennzeichnet,**
**daß** die Lebensdauer der Batterie (16) etwa der Lebensdauer der Form entspricht.

16. Spritzgießform nach einem der Ansprüche 1 bis 15,
**dadurch gekennzeichnet,**
**daß** zum Ablesen der Meßwerte oder Daten an dem Datenspeicher und/oder dem Bediengerät eine Displayanzeige (13) vorgesehen ist.

## Claims

1. Injection mould (1) having at least two mould halves (2, 3) of which at least one is movable relative to the other for opening and closing the injection mould (1), with an electronic data store (4) having a counter, whose counter (8) records the number of injection moulding procedures or the number of closing movements of the mould halves and stores said number in recallable manner in the data store (4), **characterised in that** the data store (4) is provided in removable manner on the injection mould and has a sensor (6) for detecting its removed condition and a time-recording element for determining the duration of the removed condition.

2. Injection mould according to claim 1, **characterised in that** the data store is removably attached to the immovable mould half (2).

3. Injection mould according to claim 1 or 2, **characterised in that** within a housing (5) or on a holder of the data store (4) a reed contact is provided and, on the mould half (2) having the data store (4), adjoining the site where this reed contact is provided, a magnet (9) is provided which closes the reed contact in the mounted position of the housing (5), whereby the reed contact may be opened automatically by a spatial removal of the data store (4) from the magnet (9).

4. Injection mould according to one of the claims 1 to 3, **characterised in that** at least one sensor (10) is provided, linked to the data store (4) for recording and storing at least one measuring variable during the injection moulding process with regard to its value and/or its duration.

5. Injection mould according to one of the claims 1 to 4, **characterised in that** the at least one sensor (10) for a measuring variable occurring during the injection moulding process is a temperature sensor.

6. Injection mould according to one of the claims 1 to 5, **characterised in that** the temperature sensor (10) is a thermocouple arranged in the interior of the injection mould (1) and linked via a line to the data store, which in particular is a microcontroller (7) or a microprocessor which converts the voltage values supplied by the temperature sensor (10) into temperature values.

7. Injection mould according to one of the claims 1 to 6, **characterised in that** the time recording element provided in the data store (4), in particular in the microcontroller (7), serves to record and store the duration of measurement variables of the injection moulding process that exceed a particular maximum value, for instance the temperatures.

8. Injection mould according to one of the claims 1 to 7, **characterised in that** in the interior of the injection mould (1), at least one pressure sensor is provided which is linked to the data store and, in particular, records and stores in recallable manner the pressure changes during the individual injection moulding processes.

9. Injection mould according to one of the claims 1 to 8, **characterised in that** the time-recording element is linked to a sensor (11) which records and stores in recallable manner the duration of the opening and closing times of the injection mould (1).

10. Injection mould according to one of the claims 1 to 9, **characterised in that** the sensor (11) for counting and recording the duration of the opening and closing times is arranged on the housing (5) or holder of the data store (4) and, in particular, is designed as a piezoelement and that a plunger (12) is provided, which is adjustable relative to this sensor (11) by the opening and closing of the injection mould (1) and makes contact with the sensor (11) on closing, such that the number of opening and closing procedures may be determined mechanically and the duration of the opening and closing times may be determined from the separations of the individual contact events.

11. Injection mould according to one of the claims 1 to 10, **characterised in that** the microcontroller (7) of the data store (4) records the counting impulses and calculates and stores the intermediate times between individual contacts of the plunger (12) with the piezoelement.

12. Injection mould according to one of the claims 1 to 11, **characterised in that** the stored values and data to the data store (4) are directly readable and/or are transferable via a line or wirelessly to an operating device and are readable there.

13. Injection mould according to one of the claims 1 to 12, **characterised in that** the data store has an infrared interface (14), Bluetooth, wireless LAN or similar for wireless linking with the operating device.

14. Injection mould according to one of the claims 1 to 13, **characterised in that** a battery (16) or possibly a rechargeable accumulator is provided on or in the housing (5) or holder of the data store (4) for power supply.

15. Injection mould according to one of the claims 1 to 14, **characterised in that** the life of the battery (16) is approximately equivalent to the life of the mould.

16. Injection mould according to one of the claims 1 to 15, **characterised in that** a display indicator (13) is provided for reading off the measured values or data in the data store and/or the operating device.

## Revendications

1. Moule à injecter (1) avec au moins deux demi-moules (2, 3) dont au moins un est mobile par rapport à l'autre pour l'ouverture et la fermeture du moule à injecter (1), avec une mémoire de données électronique (4) présentant un compteur, dont le compteur (8) saisit le nombre de processus d'injection ou le nombre de mouvements de fermeture des demi-moules et le stocke dans la mémoire de données (4) de manière à pouvoir être appelé,
**caractérisé par le fait**
**que** la mémoire de données (4) est fixée de manière démontable sur le moule à injecter et présente un capteur (6) pour la saisie de l'état démonté ainsi qu'un élément de saisie du temps pour la détermination de la durée de l'état démonté.

2. Moule à injecter selon la revendication 1,
**caractérisé par le fait**
**que** la mémoire de données est fixée de manière démontable sur le demi-moule (2) fixe.

3. Moule à injecter selon la revendication 1 ou 2,
**caractérisé par le fait**
**qu'**il est prévu à l'intérieur d'un boîtier (5) ou sur un support de la mémoire de données (4) un contact Reed et sur le demi-moule (2) présentant la mémoire de données (4), au voisinage de l'endroit où ce contact Reed est prévu, un aimant (9) qui ferme le contact Reed en position de montage du boîtier (5), le contact Reed pouvant s'ouvrir automatiquement par un éloignement spatial de la mémoire de données (4) de l'aimant (9).

4. Moule à injecter selon l'une des revendications 1 à 3,
**caractérisé par le fait**
**qu'**il est prévu au moins un capteur (10) relié à la mémoire de données (4) pour saisir et stocker au moins une grandeur de mesure survenant pendant le processus d'injection en ce qui concerne sa valeur et/ou sa durée.

5. Moule à injecter selon l'une des revendications 1 à 4,
**caractérisé par le fait**
**que** l'au moins un capteur (10) est un capteur de température pour une grandeur de mesure survenant pendant le processus d'injection.

6. Moule à injecter selon l'une des revendications 1 à 5,
**caractérisé par le fait**
**que** le capteur de température (10) est un thermocouple qui est disposé à l'intérieur du moule à injecter (1) et relié par une ligne à la mémoire de données, laquelle est en particulier un microcontrôleur (7) ou un microprocesseur qui convertit les valeurs de tension délivrées par le capteur de température (10) en valeurs de température.

7. Moule à injecter selon l'une des revendications 1 à 6,
**caractérisé par le fait**
**que** l'élément de saisie du temps prévu dans la mémoire de données (4), en particulier dans le microcontrôleur (7), sert à saisir et stocker la durée de grandeurs de mesure du processus d'injection, par exemple des températures, dépassant une valeur maximale donnée.

8. Moule à injecter selon l'une des revendications 1 à 7,
**caractérisé par le fait**
**qu'**il est prévu au moins un capteur de pression à l'intérieur du moule à injecter (1), qui est relié à la mémoire de données et saisit et stocke de manière à pouvoir être appelée en particulier la variation de pression pendant les différents processus d'injection.

9. Moule à injecter selon l'une des revendications 1 à 8,
**caractérisé par le fait**
**que** l'élément de saisie du temps est relié à un capteur (11) qui saisit et stocke de manière à pouvoir être appelée la durée des temps d'ouverture et de fermeture du moule à injecter (1).

10. Moule à injecter selon l'une des revendications 1 à 9,
**caractérisé par le fait**
**que** le capteur (11) pour compter et saisir la durée des temps d'ouverture et de fermeture est disposé sur le boîtier (5) ou le support de la mémoire de données (4) et en particulier constitué d'un élément piézoélectrique et qu'il est prévu un poussoir (12) qui est déplaçable par rapport à ce capteur (11) par l'ouverture et la fermeture du moule à injecter (1) et entre en contact avec le capteur (11) lors de la fermeture, de sorte qu'il est possible de déterminer le nombre d'ouvertures et de fermetures mécaniquement et la durée des temps d'ouverture et de fermeture par les intervalles entre les différents contacts.

11. Moule à injecter selon l'une des revendications 1 à 10,
**caractérisé par le fait**
**que** le microcontrôleur (7) de la mémoire de données (4) saisit les impulsions de comptage et calcule et stocke les intervalles de temps entre différents contacts du poussoir (12) avec l'élément piézoélectrique.

12. Moule à injecter selon l'une des revendications 1 à 11,
**caractérisé par le fait**
**que** les valeurs et données stockées peuvent être lues directement à la mémoire de données (4) et/ou transmises via une ligne ou sans fil à un organe de commande et lues là-bas.

13. Moule à injecter selon l'une des revendications 1 à 12,
**caractérisé par le fait**
**que** la mémoire de données présente une interface infrarouge (14), Bluetooth, Wireless LAN ou analogue pour la liaison sans fil avec l'organe de commande.

14. Moule à injecter selon l'une des revendications 1 à 13,
**caractérisé par le fait**
**qu'**il est prévu sur ou dans le boîtier (5) ou le support de la mémoire de données (4) une pile (16) ou le cas échéant un accumulateur rechargeable pour l'alimentation électrique.

15. Moule à injecter selon l'une des revendications 1 à 14,
**caractérisé par le fait**
**que** la durée de vie de la pile (16) correspond à peu près à la durée de vie du moule.

16. Moule à injecter selon l'une des revendications 1 à 15,
**caractérisé par le fait**
**qu'**il est prévu un afficheur (13) sur la mémoire de données et/ou l'organe de commande pour lire les valeurs de mesure ou les données.
